# EUROPÄISCHE PATENTSCHRIFT

(11) **EP 4 434 124 B1**
(45) Veröffentlichungstag und Bekanntmachung des Hinweises auf die Patenterteilung: **22.10.2025**
(21) Anmeldenummer: 22813294.0
(22) Anmeldetag: 08.11.2022
(51) Int. Cl.: H01R 43/02, H01R 4/18

(54) **POSITIONSABHÄNGIGE SEGMENT-STEUERUNG DER SCHWEISSPARAMETER**
POSITION-DEPENDENT SEGMENT CONTROL OF THE WELDING PARAMETERS
COMMANDE DE SEGMENT DÉPENDANT DE LA POSITION DES PARAMÈTRES DE SOUDAGE

(30) Priorität: 15.11.2021 DE 102021129735
(43) Veröffentlichungstag der Anmeldung: 25.09.2024
(73) Patentinhaber: Strunk Connect Automated Solutions GmbH & Co. KG, 57548 Kirchen-Freusburg (DE)
(72) Erfinder: STRUNK, Olaf, 57548 Kirchen (DE); KEIL, Uwe, 42499 Hückeswagen (DE)
(74) Vertreter: Klüppel, Walter
(86) Internationale Anmeldenummer: PCT/EP2022/081044
(87) Internationale Veröffentlichungsnummer: WO 2023/083768

(56) Entgegenhaltungen:
- JP-U- 3 140 817
- US-A- 5 973 287

## Beschreibung

Die Erfindung betrifft ein Verfahren zur Herstellung einer Heißcrimp-Verbindung zwischen einem Formteil und mindestens einem Draht und/oder mindestens einer mindestens zweidrähtigen Litze aus Metallen, wobei eine stoffschlüssige Verbindung sowohl zwischen den Verbindungskomponenten als auch zwischen den Drähten der Litze bei gleichzeitiger Kompaktierung und Verformung erfolgt.

Bewertung heute üblicher Kontrollparameter:
Widerstandsverlauf: Der Verlauf errechnet sich aus dem Quotienten der gemessenen Spannung und des gemessenen Stromes. Da eine direkte Messung der Spannung in der Verbindungszone technisch nicht umsetzbar ist, werden die Spannungs-Messwerte durch die Kontaktwiderstände der Komponenten und Elektroden sowie und durch die Materialwiderstände der Komponenten und Elektroden verfälscht. Eine grobe Orientierung ist aber möglich.

Strom- und Spannungsverlauf: Problematik wie bei der Widerstandsmessung.

Temperaturverlauf: Messung der Temperatur nur äußerlich möglich. Die Temperatur der Verbindungszone kann nicht direkt kontrolliert werden. Der Mess-Spot ist meist zu groß und erfasst Bauteil und Elektrode gleichermaßen. Bei optischen Systemen ist der Korrekturfaktor nur schwer zu bestimmen und nicht konstant. Thermoelemente messen die Elektrodentemperatur im Bereich der Kühlzone.

Verlauf der Anpresskraft: Zusätzliche Messgröße zur Kontrolle des Anpresskraft Verlaufes.

Einsinkweg: Durch den Verbindungsvorgang bewirktes Nachsetzen der Elektrode. Da die Gesamtstrecke erfasst wird ergibt sich keine Information über den zeitlichen Verlauf der Bewegung.

Finale Endhöhe: Kontrolle der Kundenspezifikation. Wenn die Anfangshöhe nicht erfasst wird, liefern die Messwerte keine Information über den tatsächlichen Gesamteinsinkweg. US5973287A offenbart ein Widerstandsschweißverfahren zum Verbinden von zwei Leitern mit Höhenparametern, die zwischen den Verfahrensschritten geändert werden können, was der Erfindung am nächsten kommt. JP3140817U offenbart Schweißverbindungen, die Widerstandsschweißen und Diffusionskleben umfassen, und geht auf die Unterschiede zwischen beiden ein.

Der Erfindung liegt die Aufgabe zugrunde, unter Vermeidung der geschilderten Nachteile langzeitig stabile elektrische Verbindungen zwischen elektrischen Leitern und einem Elektroanschluss mit weit möglichst ausgeschlossenen qualitativen Schwankungen herzustellen, die zudem schnell und kostengünstig erstellt werden können.

Die Aufgabe wird durch die Verfahrensschritte gemäß Anspruch 1 gelöst. Weiterführende Verfahrensschritte sind den Ansprüchen 2 bis 16 zu entnehmen.

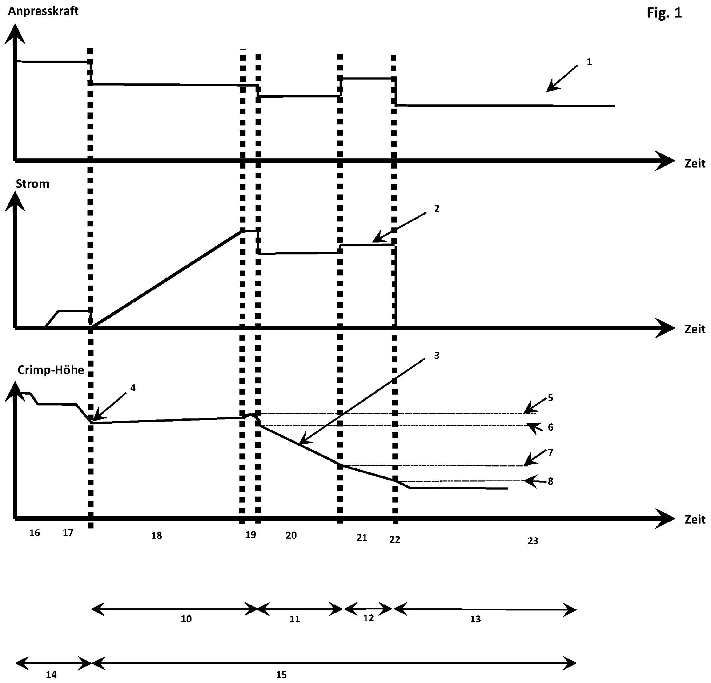

Die Erfindung wird anhand einer Zeichnung (Fig. 1) näher erläutert. Diese zeigt ein Beispiel für den Verlauf eines erfindungsgemäßen Heißcrimpvorgangs.

Fig.1 zeigt beispielhaft einen möglichen Verlauf eines Heißcrimpvorgangs (15) mit einer unmittelbar vorher stattfindenden Vorverform- bzw. Vorcrimpphase (14).

Letztere setzt sich hier aus einer Phase des Kaltcrimpens (16) und des Warmcrimpens (17) zusammen. Die Heißcrimpphase (15) setzt sich hier aus den Abschnitten Segment 1 (10), Segment 2a (11), Segment 2b (12) und Segment 3 (13) zusammen.

Das Segment 1 (10) startet mit der Erfassung der Starthöhe 4 und endet mit Unterschreitung der Umschalthöhe Segment 1 (6). Aus der Höhendifferenz von Wärmeausdehnungshub (5) und Starthöhe Heißcrimp (4) kann auf den Energieeintrag im Segment 1 (10) geschlossen werden. Diese Anfangsenergie führt zu dem ersten Verbindungsaufbau (Abschnitt a) im Segment 1 (10). Der Stromverlauf (2) gliedert sich hier in einen rampenförmigen Stromverlauf während der Erwärmung (18) und ggf. einem konstanten Stromverlauf während des hier Hartlötens (19). Dieser erste Verbindungsaufbau kann ohne Einschränkung bereits in der

Erwärmungsphase (18) beginnen und im Segment 2 (11 oder 12) enden. Die Temperaturentwicklung in der Verbindungszone hängt signifikant von dem Kraftverlauf (1), dem Stromverlauf (2), der Starthöhe (4), dem Wärmeeintrag in der Vorcrimpphase (14), der Lage der Umschalthöhen (6 + 7 + 8) und der Dauer ab.

Mit dem Erreichen des ersten Verbindungsaufbaus im Segment 1 (10) wird weiter Energie zugeführt, allerdings auf einem geänderten Niveau. Strom (2) und Kraft (1) werden hier in den Segmenten 2a+b (20 + 21) bei Erreichen der Umschalthöhen (7 + 8) den Anforderungen der Herstellung einer Diffusionsverbindung und/oder partiellen Schmelzeverbindung angepasst.

Nach Unterschreiten einer letzten Umschalthöhe im Segment 2, hier (8) , wird der Strom abgeschaltet (22) und es beginnt das Abkühlen (23) im Segment 3 (13) verbunden mit weiterem Absinken der Crimphöhe (Nachsetzen der Elektroden).

Der zeitliche Verlauf der Crimphöhe (3) in jedem Segment wird wesentlich von der Lage der Umschalthöhen (hier 6, 7, 8), vom Strom (2), der Anpresskraft (1) und der Vorerwärmung in den vorhergehenden Segmenten bestimmt.

Das beanspruchte Verfahren unterteilt den stoffschlüssigen Verbindungsprozess in mehrere, metallurgisch unterschiedlich wirkende Segmente mit unterschiedlichen Parametersätzen. Als Umschaltkriterium für jedes Segment wird das Unterschreiten einer vorgegebenen Abschalthöhe verwendet. Ist eine sichere Umschaltung nicht möglich, weil das Einsinken der Elektrode in einem Segment nicht tief genug ist, kann die Abschaltung auch durch das Überschreiten einer definierten Zeitdauer erfolgen.

Da die Anpresskraft von Segment zu Segment umschaltbar sein sollte, ist für die Dauer des Einschwingvorganges des Kraftreglers bevorzugt kein Stromfluss vorgesehen. Hierdurch wird bei einem Kraft-Unterschwinger eine Überhitzung der Elektroden u/o der Bauteile wegen zu geringer Anpresskraft vermieden.

In dieser kurzen Pausenzeit erfolgt aber in der Regel ein weiteres Kompaktieren der

Litzendrähte verbunden mit einem unkontrollierten Einsinken der Elektroden. Als Umschaltkriterium für ein Segment kann also nicht der Einsinkweg während der Bestromung, sondern die vorbestimmte Abschalthöhe eines jeden Segments verwendet werden.

Das hier beschriebene Verfahren kann auf eine Vielzahl von Metallen, wie z.B. Kupfer, Aluminium, Eisen, Titan, Nickel etc. und deren Legierungen angewandt werden, entweder sortenrein oder gemischt.

Die wichtigsten Schweißparameter sind der Strom, die Anpresskraft und die Dauer. Diese Hauptparameter werden beeinflusst von den Abmessungen der zu verbindenden Bauteile und der Elektroden, sowie den Materialeigenschaften der Bauteile, der Elektroden und der Beschichtung (Art und Dicke).

Des Weiteren sind die Kühlung und die Stromquelle zu berücksichtigen. Bei der Stromquelle spielen AC/DC, Phasenanschnitt, Pulsweite oder analog, die Stromrichtung und die Regelungsart (Konstantstrom, Konstantspannung oder Konstantleistung) eine Rolle.

Beim Heißcrimpen sind ein mechanischer und ein physikalischer Vorgang miteinander verknüpft: Das Umformen und das Verbinden.

Ganz allgemein wird hier unter Kaltcrimpen eine mechanische Verformung, die ggf. durch einen Stromfluss unterstützt werden (dann Warmcrimp), zwischen mindestens einem Formteil und einer Litze. Hier auch mit Vorpressen oder Vorverformen oder Vorcrimpen bezeichnet.

Unter Heißcrimp wird hier ein mindestens zweistufiger Verbindungsprozess mit gleichzeitiger mechanischer Verformung der mindestens zwei Verbindungspartner (Formteil und Litze) verstanden.

Grundsätzlich werden beim Heißcrimpen der Draht bzw. die Drähte und/oder die typischerweise runden- oder Profil- Drähte einer Litze/n so mit einem Formteil wie Kabelschuh, Hülse, Lasche, Steckverbinder, Stoßverbinder verbunden, dass eine dauerhafte mechanische und metallurgische, stoffschlüssige Verbindung zwischen diesen Bauteilen erzielt werden kann.

Dieser Vorgang kann grob in zwei Abschnitte unterteilt werden:
Einem Vorpressen bzw. Vorverformung zur Erzeugung einer definierten und vergrößerten Elektrodenkontaktfläche und dem eigentlichen Heißcrimpen. Letzterer lässt sich weiter untergliedern in ein vollständiges oder partielles Aufschmelzen eines Lotes wobei Hartlot mit der Eigenschaft einer Diffusionssperre gegenüber Weichlot bevorzugt wird. Es können aber auch die Verbindungspartner z.B. Kupferbauteil ohne Beschichtung mit den Aluminium-Drähten der Litze direkt verwendet werden unter nachfolgender Diffusion mit ggf. partiellem Aufschmelzen der Litzendrähte. Bei letzterem verbinden sich die Drähte der Litze miteinander.

Zeitgleich erfolgt durch den Kompaktiervorgang eine Entfernung der Isolierschichten sowohl während des Vorpressens als auch während des Heißcrimpvorganges. Diese Isolierschichten können in bekannter Weise Oxidschichten, Lackschichten, Isolierschichten oder Kontaminationsschichten sein. Die Beschichtung oder das Lot kann galvanisch (mit und ohne Stromfluss), physikalisch (Sputtern), als Form-Einlegeteil oder in Walztechnik aufgebracht werden.

Untersuchungen haben gezeigt, dass neben Anpresskraft und Strom eines jeden Segments der erzielbare Einsinkweg jedes Segments für die Schweißqualität entscheidend ist.

Entgegen den typischen Einstellparametern, Strom, Anpresskraft und Dauer für das Segment wird hier ein Parametersatz, bestehend aus Strom, Anpresskraft und Abschalthöhe vorgeschlagen. Es hat sich gezeigt, dass sich durch eine Zeitsteuerung wegen der Vielzahl von Einflussgrößen kein hinreichend sicherer und reproduzierbarer Heißcrimpvorgang erzielen lässt.

Als zusätzliches oder alternatives Kriterium für die Umschaltung in das nächste Segment kann die eingespeiste Energie oder Ladung eines jeden Segments verwendet werden.

Es werden unterschiedliche Varianten des Heißcrimps vorgeschlagen:
Beim One-Shot werden das Vorpressen und das eigentliche Heißcrimpen in einer Anlage ohne zwischenzeitliches Entnehmen der Komponenten durchgeführt, während beim Two-Shot zwei Anlagen zum Einsatz kommen.

Two-Shot: Eine erste Anlage dient zum Vorpressen und eine zweite, um den Heißcrimp durchzuführen. Beim Vorpressen wird durch einen Kaltcrimp (Kompaktierung ohne Strom) und/oder mit Unterstützung eines niedrigen Vorwärmstromes eine Vorcrimpung durchgeführt, mit dem Ziel eine definierte Vorcrimphöhe und/oder eine definierte Elektrodenkontaktfläche zu erreichen. Beim ausschließlichen Kaltcrimp ist allerdings die Kaltcrimphöhe im Wesentlichen von der Presskraft und den Materialeigenschaften bestimmt und deshalb in der Praxis für eine höhere Qualität weniger geeignet. Eine zusätzliche Höhenabschaltung kann eine Verbesserung erzielen.

Vorzugsweise wird deshalb an den Kaltcrimpvorgang direkt im Anschluss ein höhenüberwachter Warmcrimp angeschlossen. So erreicht man die definierte Vorcrimphöhe und im selben Schritt eine hinreichend gleiche Kontaktierungsfläche für die Elektroden.

Die so vorgeformten und zueinander fixierten Bauteile, Litze mit Formteil, werden im nachfolgenden Heißcrimp-Schritt nun stoffschlüssig miteinander verbunden.

Dieser Schritt wird ebenfalls in mehrere Segmente unterteilt.

Im ersten Segment wird die für die eutektische Schmelzeverbindung der äußeren Drähte der Litze mit dem Formteil notwendige Energie eingebracht. Die wichtigsten Einstellparameter sind die Anpresskraft, der Strom und die Abschalthöhe sowie Energie/Ladung.

Nach Überschreiten einer maximalen Ausdehnung und nachfolgend einer Unterschreitung einer für das Segment 1 spezifisch festgelegten Umschalthöhe und/oder Energie/Ladung wird auf das Segment 2 umgeschaltet.

Nach Erreichen eines ersten Verbindungsaufbau in der Verbindungszone der äußersten Drähte des Litzenbündels mit dem Formteil im Segment 1 erfolgt im zweiten Segment und ggf. weiteren Unter-Segmenten die Diffusionsverbindung und/oder das zumindest partielle Aufschmelzen der Drähte der Litze miteinander. Auch hier werden die Parameter Anpresskraft, Strom und Abschalthöhe und/oder Energie/Ladung für jedes Segment getrennt festgelegt.

Nach Erreichen der letzten Schaltschwelle wird der Strom abgeschaltet und mit der neu angepassten Anpresskraft die Abkühlung eingeleitet.

Durch diese mehrstufige Prozessführung kann verhindert werden, dass die z.B. niedriger schmelzende Litze in unzulässiger Menge in Schmelze übergeht und so die Festigkeit der gesamten Verbindung durch Änderung der Legierung und Reduzierung des Querschnitts schwächt.

Als wichtiges Qualitätskriterium für eine Schweißgüte-Überwachung kann die gemessene Ausdehnung des Formteils und der Litze infolge der Wärmeausdehnung durch den eingeleiteten Strom und die erfasste Dauer der Bestromung oder die eingebrachte Energie/Ladung jedes einzelnen Segments herangezogen werden.

Beim One-Shot sind die Prozesse Vorpressen und Heißcrimpen zu einem Gesamtprozess zusammengefügt.

In einer weiteren Ausgestaltung kann die Vorcrimpphase in die Erwärmungsphase des Segment 1 integriert sein.

Zur zerstörungsfreien Kontrolle des Verbindungsvorganges werden üblicherweise der Widerstandsverlauf, der Strom- oder Spannungsverlauf, der Temperaturverlauf, der Verlauf der Anpresskraft, der Einsinkweg oder die finale Endhöhe verwendet.

Zerstörende Prüfungen nach DIN oder nach Kundenspezifikation können chargenbegleitend durchgeführt werden.

Ziel der Kontrolle ist die Sicherstellung einer langzeitstabilen und stoffschlüssigen Verbindung zwischen den Bauteilen/Schweißpartnern.

Für Schweißaufgaben, wie z.B. Heißcrimpen, hat es sich erfindungsgemäß bewährt, den Schweißablauf in mehrere Segmente mit üblicherweise unterschiedlichen Parametersätzen aufzuteilen. Damit wird den unterschiedlichen metallurgischen Umwandlungen während des Verbindungsprozesses besser Rechnung getragen und es stehen weitere Messgrößen für die Bewertung der Qualität der Schweißverbindung zur Verfügung.

Dieses Verbindungsverfahren ist dadurch gekennzeichnet, dass die Aufteilung des Verbindungsprozesses in mehrere Segmente mit für jedes Segment optimalen Prozessparametern erfolgt. Die Qualitätskontrolle kann in der Überwachung des Wärmeausgleichshubs, in der tatsächlichen Einzelsegmentdauer und/oder der Einsinkgeschwindigkeit und/oder der eingespeisten Energie/Ladung oder Stromdauer jedes Segments liegen.

Die Messdaten und die Einstellgrößen eines jedes individuellen Bauteils werden in der Datenbank abgespeichert. Die individuelle Kennzeichnung erfolgt in bekannter Weise durch das Aufbringen eines Datencodes wie Barcode, Data Matrix Code, etc. auf einem der Komponenten. Eine beschränkte Rückverfolgbarkeit erreicht man, wenn man Loskarte und Zeitstempel einsetzt.

Wesentlich ist, dass diese mehrstufige Verbindungstechnik die Herstellung einer stoffschlüssigen und mechanisch festen Verbindung zwischen gleichen oder verschiedenen metallischen Werkstoffen ermöglicht. Insbesondere können mit einem zweistufigen Verfahren Werkstoffe verbunden werden, die weit auseinander liegende Schmelzpunkte haben. Ohne Anwendung des hier beschriebenen Verfahrens besteht die Gefahr, dass der niedrigschmelzende Werkstoff in Schmelze übergeht, bevor eine Verbindung zwischen den Verbindungspartnern entstehen kann.

Heute müssen bei der Parameterfindung stets Stromstärke und Zeit gesondert eingestellt werden und in Versuchen die Auswirkung auf die Verformung und damit den Einsinkweg über die Zeit ermittelt werden. Zusätzlich sind beim Heißcrimpen wegen des hohen Strombedarfs Schwankungen im Stromnetz zu erwarten, die in der Definitionsphase die Parameterfindung und in der Produktionsphase eine stabile Produktionsqualität zusätzlich erschweren.

Eine Lösung dieser Probleme stellt die höhenabhängige und/oder von der eingespeisten Energie/Ladung abhängige Umschaltung der einzeln optimierten Segmente einer Heißcrimpung dar. Die Dauer passt sich für jedes Segment durch den Umschaltmechanismus an die bauteilspezifische Situation an. Schwankungen in den Materialeigenschaften, Abmessungen, Stromversorgung, in der Elekrodenabnutzung etc. werden so für jedes einzelne Bauteil individuell kompensiert.

Zusammen bedeutet dies einen sehr hohen Level an Fertigungsqualität und die Möglichkeit zur Rückverfolgbarkeit und Prozessoptimierung. In einfacher Weise können so Chargenschwankungen und/oder Anlageninstabilitäten erfasst, automatisiert ausgewertet werden und automatisiert eingegriffen werden.

Die physikalischen Eigenschaften der Werkstoffe, auch der Elektroden bestimmen den Temperaturverlauf der Eigenerwärmung während der drei Abschnitte a,b,c. Höherohmige Werkstoffe, z.B. Wolfram, führen zu einer stärkeren Eigenerwärmung als niederohmige Werkstoffe wie z.B. Kupfer.

Zusätzlich beeinflusst die Wärmeleitfähigkeit den Wärmeabfluss von der Kontaktzone zur Kühlung. Auch spezifisches Gewicht und spezifische Wärmekapazität verändern, gemäß der Gleichung für die adiabatische Erwärmung, das Aufheizverhalten der Elektroden.

Bei Betrachtung der Adiabatische Temperaturerhöhung = Strom^2 / Fläche ^2 * spez. Widerstand / Spez. Gewicht / spez. Wärmekapazität * Zeitdauer, ergibt sich auch, dass bei der Festlegung der Elektroden neben der Werkstoffwahl die Fläche der Kontaktzone und die Kontur (plan, konkav oder konvex) der Kontaktzone eine wichtige Rolle spielen.

Dem Erfindungsgedanken folgend wird hier eine anwendungsspezifische Optimierung der Abmessungen und der Werkstoffe vorgeschlagen, um den Wärmefluss in dem Formteil und in der Litze in der erforderlichen Weise zu steuern.

Erfordert beispielsweise eine Anwendung eine stärkere Wärmeentwicklung auf der beispielsweise unteren Elektrode, so wird diese bevorzugt aus einem höherohmigen Werkstoff und/oder mit einer vergleichsweise kleineren Kontaktfläche gefertigt, als die gegenüberliegende obere Elektrode. Dieser Fall tritt bei Formteilen ein, bei der die Litze auf der unteren "laschen"-seitigen Kontaktzone stärker erwärmt werden muss, als auf der oberen "litzen"-seitigen Kontaktzone. Eine Strom- oder Daueränderung führt nur zu einer gleichen Elektrodenerwärmung auf beiden Seiten.

Bei der Herstellung einer langzeitstabilen und stoffschlüssigen Verbindung zwischen einem Formteil und einer Litze wird der Vorgang in mehrere Abschnitte unterteilt. Dies ist wichtig, da die Wärmeentwicklung in der Verbindungszone Formteil mit äußerem Drahtring der Litze und innerhalb des Litzenverbundes so gesteuert werden, dass die Schmelztemperatur des zum Beispiel Aluminiums nur partiell erreicht werden. Ein vollständiges Aufschmelzen, wie es bei der Widerstandsschweißung namensgebend eintritt, würde zu folgenden Fehlerquellen führen:
Der durch den Crimpvorgang erzeugte Kompaktierungsdruck, der für die Zerstörung der nichtleitenden Schichten auf den Drähten (Oxidschicht und/oder Lackschicht) notwendig ist, kann sich nicht aufbauen. Er führt im Gegenteil zu einer Ausquetschung des aufgeschmolzenen Litzenmaterials (z.B. Aluminiums) und folglich bilden sich nur unzulänglich die Kontaktflächen zwischen den Litzendrähten aus. Zudem erfolgt die Wärmeentwicklung nicht vorwiegend durch den Stromfluss durch die Litze (Eigenerwärmung), sondern durch den durch die Elektroden und das Formteil fließende Strom.

Nach der Anbindung der äußeren Drähte an die Hülse wird mit zunehmender Verformung und dadurch sich vergrößernden Kontaktfläche zwischen den Drähten, Oxidschicht und Isolierschicht durch Druck und Temperatur entfernt, nur so viel Energie zugeführt, dass die Litze auf Diffusionstemperatur gehalten werden kann. Falls in diesem Abschnitt ein verstärktes Aufschmelzen der Litzendrähte eintreten würde, würde dies zu einem unzulässigen Schmelzeaustritt und einer ungenügenden Anbindung der Drähte zueinander führen.

Für die Erzeugung der Schmelze ist zuerst die Joule'sche Wärme für das Erreichen der Schmelztemperatur und dann die Schmelzwärme, erforderlich. Zusätzlich muss die Wärme, die über Elektroden und Komponenten abfließt, eingebracht werden. Typischer Weise liegt die Schmelzwärme um den Faktor neun höher als die Joule'sche Wärme.

Eine Diffusionsverbindung erfordert im Gegensatz dazu eine hohe Anpresskraft, eine hohe Temperatur, aber unterhalb der Schmelztemperatur, und eine lange Dauer.

Damit eine verstärkte Schmelzebildung nicht eintritt, wird der Gesamtvorgang in mehrere Abschnitte, und ggf. in Unterabschnitte, unterteilt, um bei gleichzeitig hoher Anpresskraft und möglichst langer Dauer eine feste Diffusionsverbindung und keine Schmelzeverbindung innerhalb der Litze zu erzeugen. Dabei haben sich unterschiedliche Stromeinstellung oder Stromflussdauern oder Einsinkgeschwindigkeiten für jedes der Segmente bewährt. Die Umschaltung zwischen den Segmenten kann bevorzugt höhengesteuert und oder in Abhängigkeit der eingespeisten Energie/Ladung erfolgen.

Hilfreich für die Sicherstellung des Diffusionsvorganges anstelle eines Schmelzevorganges ist die physikalische Eigenschaft, dass der Wärmebedarf für die Erzeugung einer Schmelze ca. 9 mal höher ist als die Joule'sche Erwärmung.

Ein partielles, oftmals punktuelles Aufschmelzen zwischen den Drähten entsteht, weil bei der Verformung einige der Drähte eine punktuelle Berührung (Asperiden) zueinander aufweisen und diese kleinen Flächen eine sehr hohe Temperatur entwickeln.

Die erste Verbindung zwischen dem Formteil und den Litzendrähten entsteht durch ein eutektisches Aufschmelzen zwischen dem Litzenmaterial und dem Formteil. Da beide Materialien einzeln oder beidseitig beschichtet sein können, ergeben sich neben vielen möglichen Kombinationen beispielsweise folgende Kombinationen:
Kupfer Formteil blank mit Aluminium Litze blank
Kupfer Formteil beschichtet mit Aluminium Litze blank
Kupfer Formteil beschichtet mit Aluminium Litze beschichtet
Kupfer Formteil blank mit Aluminium Litze beschichtet

Für die Beschichtung stehen die bekannten Weichlote Zinn und Zink und als Hartlote die Aluminium Hartlote nach DIN oder eutektische Lote mit der bevorzugten Eigenschaften einer Diffusionsbarriere, wie z.B. Nickel oder Silber, zur Verfügung. Die Materialien für die Beschichtung ändern sich mit den Komponentenwerkstoffen. Wichtig ist die eutektische Temperatur.

Wesentlich für diese Heißcrimp-Verbindungstechnik ist die Forderung, dass die Verbindungspartner eine Eutektische Schmelztemperatur unterhalb der Schmelztemperatur des Litzenmaterials haben. Z.B. hat Kupfer mit Aluminium eine Eutektische Schmelztemperatur von ca. 550°C, Silber mit Aluminium von ca. 570°C (falls Kupfer mit Silber beschichtet wurde) und Nickel mit Aluminium von ca. 640°C (falls Kupfer mit Nickel beschichtet wurde).

Der Erfindungsgedanke zielt, im Gegensatz zu den
Widerstandsschweißverbindungen, auf eine zweistufige Prozessfolge mit zuerst eutektischer Schmelzverbindung (Abschnitt a) zwischen Litze und Formteil und einem zweiten Verbindungsaufbau (Abschnitt b) Diffusionsvorgang zwischen den Litzendrähten, ab.

Eine Überlappung der Abschnitte (a und b) kann naturgemäß auftreten, da durch die räumliche Ausdehnung der Kontaktierungs- und Verbindungszone eine unterschiedliche lokale Erwärmung eintreten wird.

Für jedes Segment kann eine optimale Einsinkgeschwindigkeit vorgegeben werden. Während des Prozesses wird kontinuierlich innerhalb eines jeden Segments aus dem erfolgten Einsinkweg und der dafür benötigten Dauer eine Einsinkgeschwindigkeit berechnet. Diese Trajektorie wird mit der Soll-Trajektorie verglichen und unter Anwendung von regelungstechnischen Algorithmen der Strom nachgeregelt. Bei Unterschreiten der Umschalthöhe und/oder das Erreichen der vorgewählten Energie/Ladung dieses Segments wird auf das nächste Segment umgeschaltet.

## Patentansprüche

1. Verfahren zur Herstellung einer Heißcrimp-Verbindung zwischen einem Formteil und mindestens einem Draht und/oder mindestens einer mindestens zweidrähtigen Litze aus Metallen, wobei eine stoffschlüssige Verbindung sowohl zwischen den Verbindungskomponenten als auch zwischen den Drähten der Litze bei gleichzeitiger Kompaktierung und Verformung erfolgt,
**dadurch gekennzeichnet,**
**dass** folgende metallurgisch unterschiedlichen Abschnitte sequentiell durchlaufen werden:
a) Segment 1: Erzeugen einer ersten Verbindung zwischen dem Formteil und der äußeren Schicht der Drähte und/oder Litzendrähte durch einen vollständigen und/oder partiellen eutektischen Schmelzvorgang der durch die zeitlich parallel verlaufende Kompaktierung und/oder Vorverformung von einer isolierenden Schicht befreiten äußeren Drähte,
b) Segment 2: Erzeugen einer Diffusionsverbindung und/oder einer zumindest partiellen Schmelzeverbindung zwischen den von der isolierenden Schicht durch die Kompaktierung befreiten inneren Drähten der Litze,
c) Segment 3: Stromloses Abkühlen des heißgecrimpten Verbundes,
wobei eine Umschaltung zwischen mindestens zwei aufeinander folgender Segmente nach Erreichen einer segmentspezifischen Höhenposition und/oder einer eingespeisten Energie/Ladung erfolgt.

2. Verfahren nach Anspruch 1,
**dadurch gekennzeichnet,**
**dass** bei Überschreiten einer segmentabhängig festgelegten Zeitdauer eine Abschaltung des jeweiligen Segments erfolgt.

3. Verfahren nach Anspruch 1 oder 2,
**dadurch gekennzeichnet,**
**dass** der Elektrodenstrom so geregelt wird, dass die Weg-Zeit-Trajektorie der Elektroden der segmentabhängig festgelegten Einsinkgeschwindigkeit folgt und eine Umschaltung in das nächste Segment nach Unterschreiten einer segmentspezifischen Höhenposition und/oder dem Erreichen einer Energie/ Ladung erfolgt.

4. Verfahren nach einem der Ansprüche 1 bis 3,
**dadurch gekennzeichnet,**
**dass** die erste Verbindung gemäß Abschnitt a im Segment 1 durch einen Lötvorgang erfolgt.

5. Verfahren nach einem der Ansprüche 1 bis 3,
**dadurch gekennzeichnet,**
**dass** die erste Verbindung gemäß Abschnitt a im Segment 1 durch einen eutektischen Schmelzvorgang der unbeschichteten Komponenten erfolgt.

6. Verfahren nach einem der Ansprüche 1 bis 4,
**dadurch gekennzeichnet,**
**dass** das Formteil mit einem Metall beschichtet ist, das gleich oder metallurgisch sehr ähnlich dem Werkstoff der Litze ist.

7. Verfahren nach einem der Ansprüche 1 bis 6,
**dadurch gekennzeichnet,**
**dass** die Abschnitte a und/oder b und/oder c in weitere Segmente unterteilt sind.

8. Verfahren nach einem der Ansprüche 1 bis 7,
**dadurch gekennzeichnet,**
**dass** für jedes Segment die Anpresskraft, der Stromverlauf, der Strompegel, die Einsinkgeschwindigkeit, die Maximaldauer, die Energie/Ladung und die Umschalthöhe festgelegt sind.

9. Verfahren nach Anspruch 8,
**dadurch gekennzeichnet,**
**dass** Anstelle der Umschalthöhe der Elektrodenverfahrweg als Umschaltkriterium festgelegt ist.

10. Verfahren nach einem der Ansprüche 1 bis 9,
**dadurch gekennzeichnet,**
**dass** der Wärmeausdehnungshub und für jedes Einzelsegment die Dauer und/oder der Verfahrweg und/oder die Einsinkgeschwindigkeit und/oder die Energie/Ladung als Qualitätskriterium verwendet werden.

11. Verfahren nach einem der Ansprüche 1 bis 10,
**dadurch gekennzeichnet,**
**dass** die Werkstoffe für die mindestens zwei gegenüberliegenden Elektroden aus unterschiedlichem Material bestehen.

12. Verfahren nach einem der Ansprüche 1 bis 11,
**dadurch gekennzeichnet,**
**dass** die Kontaktflächen der Elektroden zum Bauteil jeweils unterschiedlich sind.

13. Verfahren nach einem der Ansprüche 1 bis 12,
**dadurch gekennzeichnet,**
**dass** vor dem Heißcrimpen eine höhenüberwachte Vorverformung stattfindet.

14. Verfahren nach den Ansprüchen 1 bis 13,
**dadurch gekennzeichnet, dass** die Vorverformung und Heißcrimpung gleichzeitig oder unmittelbarer aufeinander folgend in der gleichen Anlage durchgeführt wird.

15. Verfahren nach den Ansprüchen 1 bis 14,
**dadurch gekennzeichnet,**
**dass** die Vorverformung während der Erwärmung innerhalb des Segments 1 durchgeführt wird.

16. Verfahren nach den Ansprüchen 1 bis 15,
**dadurch gekennzeichnet, dass** alle prozessrelevanten Einstellgrößen und Messwerte erfasst werden und dem Einzelbauteil zugeordnet werden.

## Claims

1. A method for producing a hot-crimp connection between a shaped part and at least one wire and/or at least one stranded wire having at least two wires made of metals, wherein a material connection is produced both between the connecting components and between the wires of the stranded wire with simultaneous compaction and deformation,
**characterized in that**
the following metallurgically different sections are run through sequentially:
a) segment 1: producing a first connection between the shaped part and the outer layer of the wires and/or stranded wires by a complete and/or partial eutectic melting process of the outer wires released from an insulating layer by the compaction and/or pre-deformation carried out concurrently,
b) segment 2: producing a diffusion bond and/or an at least partial fusion bond between the inner wires of the stranded wire released from the insulating layer by the compaction,
c) segment 3: de-energized cooling of the hot-crimped connection, wherein a switchover takes place between at least two successive segments after a segment-specific height position has been reached and/or an energy/charge has been fed in.

2. The method according to Claim 1, **characterized in that** the respective segment is switched off when a fixed segment-dependent time period has been exceeded.

3. The method according to Claim 1 or 2, **characterized in that** the electrode current is regulated such that the path-time trajectory of the electrodes follows the fixed segment-dependent sinking speed and a switchover to the next segment takes place after dropping below a segment-specific height position and/or when an energy/charge has been reached.

4. The method according to one of Claims 1 to 3, **characterized in that** the first connection takes place according to section a in segment 1 by a soldering process.

5. The method according to one of Claims 1 to 3, **characterized in that** the first connection takes place according to section a in segment 1 by an eutectic melting process of the uncoated components.

6. The method according to one of Claims 1 to 4, **characterized in that** the shaped part is coated with a metal which is identical or metallurgically very similar to the material of the stranded wire.

7. The method according to one of Claims 1 to 6, **characterized in that** the sections a and/or b and/or c are subdivided into further segments.

8. The method according to one of Claims 1 to 7, **characterized in that** the contact force, the current curve, the current level, the sinking speed, the maximum duration, the energy/charge and the switchover height are fixed for each segment.

9. The method according to Claim 8, **characterized in that**, instead of the switchover height, the electrode travel path is fixed as a switchover criterion.

10. The method according to one of Claims 1 to 9, **characterized in that** the heat expansion stroke and, for each individual segment, the duration and/or the travel path and/or the sinking speed and/or the energy/charge are used as quality criteria.

11. The method according to one of Claims 1 to 10, **characterized in that** the materials for the at least two opposing electrodes consist of different material.

12. The method according to one of Claims 1 to 11, **characterized in that** the contact surfaces of the electrodes relative to the component in each case are different.

13. The method according to one of Claims 1 to 12, **characterized in that** a height-monitored pre-deformation takes place before the hot-crimping.

14. The method according to Claims 1 to 13, **characterized in that** the pre-deformation and the hot-crimping are carried out at the same time or immediately one after the other in the same system.

15. The method according to Claims 1 to 14, **characterized in that** the pre-deformation is carried out during the heating within segment 1.

16. The method according to Claims 1 to 15, **characterized in that** all process-relevant setting variables and measured values are detected and assigned to the individual component.

## Revendications

1. Procédé de réalisation d'une liaison par sertissage à chaud entre une pièce moulée et au moins un fil et/ou au moins un toron métallique à deux brins, dans lequel une liaison matérielle est créée tant entre les composants de liaison qu'entre les brins du toron lors d'un compactage et d'une déformation simultanés,
**caractérisé en ce que**
les sections métallurgiquement différentes suivantes sont parcourues successivement :
a) Segment 1 : création d'une première liaison entre la pièce moulée et la couche extérieure des fils et/ou des torons par fusion eutectique complète et/ou partielle des fils extérieurs libérés de la couche isolante par compactage et/ou pré-déformation parallèles dans le temps,
b) Segment 2 : création d'une liaison par diffusion et/ou d'une liaison par fusion au moins partielle entre les brins intérieurs du toron libérés de la couche isolante par compactage,
c) Segment 3 : refroidissement sans courant de la connexion sertie à chaud, dans lequel une commutation entre au moins deux segments consécutifs a lieu après l'atteinte d'une hauteur spécifique au segment et/ou l'application d'une énergie/charge.

2. Procédé selon la revendication 1,
**caractérisé en ce que**
le dépassement d'une durée spécifique au segment met le segment concerné hors service.

3. Procédé selon la revendication 1 ou 2,
**caractérisé en ce que**
le courant des électrodes est régulé de telle sorte que la trajectoire temps-trajet des électrodes suive la vitesse de descente spécifique au segment et une commutation vers le segment suivant intervient après le passage sous la hauteur spécifique au segment et/ou l'atteinte d'une énergie/charge.

4. Procédé selon une quelconque des revendications 1 à 3, **caractérisé en ce que**
la première connexion selon la section a du segment 1 est réalisée par brasage.

5. Procédé selon une quelconque des revendications 1 à 3, **caractérisé en ce que**
la première connexion selon la section a du segment 1 est réalisée par fusion eutectique des composants non revêtus.

6. Procédé selon une quelconque des revendications 1 à 4, **caractérisé en ce que**
la pièce moulée est revêtue d'un métal identique ou très similaire, sur le plan métallurgique, au matériau du toron.

7. Procédé selon une quelconque des revendications 1 à 6, **caractérisé en ce que**
les sections a et/ou b et/ou c sont divisées en segments supplémentaires.

8. Procédé selon une quelconque des revendications 1 à 7, **caractérisé en ce que**,
pour chaque segment, la force de contact, le profil de courant, le niveau de courant, la vitesse de descente, la durée maximale, l'énergie/charge et la hauteur de commutation sont spécifiés.

9. Procédé selon la revendication 8,
**caractérisé en ce que**,
au lieu de la hauteur de commutation, la distance de déplacement de l'électrode est spécifiée comme critère de commutation.

10. Procédé selon une des revendications 1 à 9, **caractérisé en ce que**
la course de dilatation thermique et, pour chaque segment individuel, la durée et/ou la distance parcourue et/ou la vitesse de descente et/ou l'énergie/charge sont utilisées comme critères de qualité.

11. Procédé selon une des revendications 1 à 10, **caractérisé en ce que**
les matériaux des au moins deux électrodes opposées sont différents.

12. Procédé selon une des revendications 1 à 11, **caractérisé en ce que**
les surfaces de contact des électrodes avec le composant sont respectivement différentes.

13. Procédé selon une des revendications 1 à 12, **caractérisé en ce que**
un préformage avec contrôle de la hauteur est effectué avant le sertissage à chaud.

14. Procédé selon les revendications 1 à 13, **caractérisé en ce que**
le préformage et le sertissage à chaud sont réalisés simultanément ou immédiatement après dans la même installation.

15. Procédé selon les revendications 1 à 14, **caractérisé en ce que**
le préformage est réalisé pendant le chauffage à l'intérieur du segment 1.

16. Procédé selon les revendications 1 à 15, **caractérisé en ce que**
toutes les variables de réglage et valeurs mesurées pertinentes pour le processus sont enregistrées et affectées au composant individuel.
